# EUROPÄISCHE PATENTANMELDUNG

(11) **EP 4 163 040 A1**
(43) Veröffentlichungstag der Anmeldung: **12.04.2023**
(21) Anmeldenummer: 21201471.6
(22) Anmeldetag: 07.10.2021
(51) Int. Cl.: B23K 3/02, B23K 3/08, B23K 9/095, B23K 9/167, B23K 9/173, B23K 9/32, B23K 10/02, H05H 1/26, B23K 9/10, B23K 9/12

(54) **STEUERUNG EINER SCHWEISS- UND/ODER LÖTRAUCHABSAUGEINRICHTUNG ABHÄNGIG VOM ANGESCHLOSSENEN BRENNER**

(71) Anmelder: EWM AG, 56271 Mündersbach (DE)
(72) Erfinder: Szczesny, Michael, 56271 Mündersbach (DE)
(74) Vertreter: Cohausz & Florack

(57) **Zusammenfassung**

Die Erfindung betrifft eine Vorrichtung (100, 300) zum Einsatz beim Schweißen oder Löten unter Schutzgasatmosphäre mit Anschlussmitteln (180, 380) zum Anschließen eines Brenners (210, 210', 210") mit integrierter Absaugung, mit einer Absaugeinrichtung (116, 316) zur Bereitstellung eines Absaugluftstroms über die Anschlussmittel (180, 380) und mit einer Steuereinrichtung (190, 390), wobei die Steuereinrichtung (190, 390) dazu eingerichtet ist, eine Brenner-Information über einen an die Anschlussmittel (180, 380) angeschlossenen Brenner (210, 210', 210") zu erhalten und die Absaugeinrichtung (116, 316) abhängig von der ermittelten Brenner-Information zu steuern. Die Erfindung betrifft weiter ein System (200, 400) zum Einsatz beim Schweißen oder Löten unter Schutzgasatmosphäre mit einer solchen Vorrichtung (100, 300) sowie ein Verfahren zum Steuern einer Absaugeinrichtung (116, 316) einer Vorrichtung (100, 300) zum Einsatz beim Schweißen oder Löten unter Schutzgasatmosphäre.

## Beschreibung

Die Erfindung betrifft eine Vorrichtung zum Einsatz beim Schweißen oder Löten unter Schutzgasatmosphäre mit Anschlussmitteln zum Anschließen eines Brenners mit integrierter Absaugung, mit einer Absaugeinrichtung zur Bereitstellung eines Absaugluftstroms über die Anschlussmittel und mit einer Steuereinrichtung. Die Erfindung betrifft weiterhin ein System zum Einsatz beim Schweißen oder Löten unter Schutzgasatmosphäre umfassend eine solche Vorrichtung. Weiterhin betrifft die Erfindung ein Verfahren zum Steuern einer Absaugeinrichtung einer Vorrichtung zum Einsatz beim Schweißen oder Löten unter Schutzgasatmosphäre.

Die beim Schweißen oder Löten auftretenden hohen Temperaturen führen zur Bildung von Abgasen, insbesondere Rauchgas, die zum Teil gesundheitsschädlich sind. Zum Schutz der in unmittelbarer Nähe des Schweißvorgangs tätigen Arbeitskräfte ist es erforderlich, diese Abgase vom Arbeitsplatz abzusaugen, ehe sie sich mit der Raumluft mischen.

Eine besondere Schwierigkeit beim Absaugen der Abgase zeigt sich, wenn Verfahren zum Schweißen oder Löten unter Schutzgasatmosphäre durchgeführt werden. Für einen ordnungsgemäßen Betrieb ist es erforderlich, dass das während des Schweißoder Lötvorgangs applizierte Schutzgas die Elektrode und das Werkstück an der Stelle, an der Material aufgeschmolzen wird, sicher abdeckt. Andernfalls kann es an der betreffenden Stelle zu Oxidationsvorgängen und anderen Reaktionen kommen, die die Qualität des Schweißens oder Lötens nachteilig beeinflussen können. Wenn Schutzgas unmittelbar an der Elektrode, die den Lichtbogen erzeugt, oder um diese herum vorgesehen wird, ist es zur Ausbildung eines stabilen Schutzgasmantels erforderlich, dass keine störenden Luftströmungen das Schutzgas fortreißen.

Aus dem Stand der Technik sind verschiedene Verfahren und Vorrichtungen zur Steuerung der Absaugeinrichtung einer Schweißvorrichtung bekannt. In der EP 2 292 367 B1 wird beispielsweise ein Verfahren offenbart, bei dem die Absaugung in Abhängigkeit von an der Schweißvorrichtung einstellbaren oder voreingestellten Prozessparametern des Schweißprozesses gesteuert wird, nämlich zum Beispiel für die Brennervorschubgeschwindigkeit, die Drahtvorschubgeschwindigkeit oder den Drahtdurchmesser.

Es hat sich jedoch gezeigt, dass bei einer solchen automatischen Steuerung der Absaugeinrichtung relevante Einflussgrößen für die Absaugung unberücksichtigt bleiben.

Vor diesem Hintergrund liegt der vorliegenden Erfindung die Aufgabe zu Grunde, ein Verfahren und eine Vorrichtung zur Verfügung zu stellen, mit denen die Steuerung der Absaugung vereinfacht und/oder verbessert wird.

Diese Aufgabe wird erfindungsgemäß gelöst durch eine Vorrichtung zum Einsatz beim Schweißen oder Löten unter Schutzgasatmosphäre mit Anschlussmitteln zum Anschließen eines Brenners mit integrierter Absaugung, mit einer Absaugeinrichtung zur Bereitstellung eines Absaugluftstroms über die Anschlussmittel und mit einer Steuereinrichtung, wobei die Steuereinrichtung dazu eingerichtet ist, eine Brenner-Information über einen im Betrieb an die Anschlussmittel angeschlossenen Brenner zu erhalten und die Absaugeinrichtung abhängig von der ermittelten Brenner-Information zu steuern.

Verfahrensmäßig wird die zuvor genannte Aufgabe erfindungsgemäß gelöst durch ein Verfahren zum Steuern einer Absaugeinrichtung einer Vorrichtung zum Einsatz beim Schweißen oder Löten unter Schutzgasatmosphäre, insbesondere der zuvor beschriebenen Vorrichtung oder einer Ausführungsform davon, bei dem eine Brenner-Information über einen an die Vorrichtung zum Schweißen oder Löten angeschlossenen Brenner automatisch ermittelt wird und bei dem die Absaugeinrichtung abhängig von der Brenner-Information gesteuert wird.

Die Vorrichtung ist zum Einsatz beim Schweißen oder Löten unter Schutzgasatmosphäre ausgebildet. Insbesondere kann die Vorrichtung zum Einsatz beim Metallschutzgasschweißen (MSG-Schweißen), zum Beispiel zum Metallinertgasschweißen (MIG-Schweißen) oder Metallaktivgasschweißen (MAG-Schweißen), ausgebildet sein. Alternativ kann die Vorrichtung auch zum Einsatz beim Wolfram-Inertgas-Schweißen (WIG-Schweißen) oder zum Plasmaschweißen ausgebildet sein.

Die Vorrichtung kann eine Stromquelle, insbesondere Schweißstromquelle oder Lötstromquelle, zur Bereitstellung eines Schweiß- oder Lötstroms umfassen. Beispielsweise kann die Absaugeinrichtung oder die Steuereinrichtung der Vorrichtung oder ein Teil davon in die Stromquelle integriert sein. Es ist aber auch denkbar, dass die Vorrichtung keine Stromquelle aufweist und zum Schweißen oder Löten eine gesonderte Stromquelle verwendet wird.

Die Vorrichtung kann entsprechend zum Beispiel alleine oder zusammen mit weiteren Geräten, zum Beispiel einer gesonderten Schweiß- oder Lötstromquelle, zum Schweißen oder Löten unter Schutzgasatmosphäre verwendet werden.

Die Vorrichtung kann in einem oder mehreren Gehäusen untergebracht sein. Insbesondere kann die Vorrichtung mehr als ein Gerät umfassen, beispielsweise eine Stromquelle und ein Drahtvorschubgerät oder eine als gesondertes Gerät ausgebildete Absaugeinrichtung und ein Drahtvorschubgerät.

Wenn die Vorrichtung eine Stromquelle zur Bereitstellung eines Schweiß- oder Lötstroms aufweist, umfasst diese vorzugsweise ein Leistungsteil zur Bereiststellung des Schweiß- oder Lötstroms sowie eine Steuereinheit zur Steuerung der Stromquelle.

Die Vorrichtung weist weiter Anschlussmittel zum Anschließen eines Brenners mit integrierter Absaugung auf. Die Anschlussmittel können insbesondere ein oder mehrere Anschlüsse umfassen, an die für den Betrieb das Schlauchpaket des Brenners angeschlossen werden kann. Bei dem Brenner handelt es sich vorzugsweise um einen Handbrenner. Alternativ kann es sich bei dem Brenner auch um einen Brenner für das automatisierte Schweißen, insbesondere Roboterschweißen, handeln.

Die Vorrichtung umfasst weiter eine Absaugeinrichtung. Die Absaugeinrichtung dient zur Bereitstellung eines Absaugluftstroms über die Anschlussmittel. Zu diesem Zweck umfassen die Anschlussmittel insbesondere einen Anschluss zur Koppelung einer im Schlauchpaket des Brenners vorgesehenen Absaugleitung mit der Absaugeinrichtung.

Umfasst die Vorrichtung eine Stromquelle zur Bereitstellung eines Schweiß- oder Lötstroms, so kann die Absaugeinrichtung beispielsweise in der Stromquelle untergebracht sein.

Die Absaugeinrichtung kann alternativ auch als gesondertes Gerät vorgesehen sein. Dies ist besonders vorteilhaft beim MSG-Schweißen, da das beim MSG-Schweißen üblicherweise verwendete Drahtvorschubgerät mit dem daran angeschlossenen Schweißbrenner im Betrieb sehr weit weg von der Schweißstromquelle entfernt sein kann, zum Beispiel 30 bis 60 m. Eine separate Absaugeinrichtung kann dann in der Nähe des Drahtvorschubgerät positioniert werden, um die Absaugleitung im Schlauchpaket des Brenners möglichst kurz und die für den gewünschten Absaugluftstrom erforderliche elektrische Leistung möglichst gering zu halten.

Die Vorrichtung umfasst weiter eine Steuereinrichtung. Die Steuereinrichtung kann zum Beispiel durch eine Steuereinheit der Absaugeinrichtung oder, wenn die Vorrichtung eine Schweiß- oder Lötstromquelle umfasst, durch eine Steuereinheit der Schweiß- oder Lötstromquelle gebildet werden oder diese umfassen. Weist die Absaugeinrichtung eine eigene Steuereinheit auf, so kann diese zum Beispiel mit einer Steuereinheit der Stromquelle und/oder mit einer Steuereinheit eines Drahtvorschubgeräts über eine Datenverbindung verbunden sein.

Die Steuereinrichtung ist dazu eingerichtet, eine Brenner-Information über einen im Betrieb an die Anschlussmittel angeschlossenen Brenner zu erhalten, vorzugsweise zu empfangen und/oder zu ermitteln, und die Absaugeinrichtung abhängig von der ermittelten Brenner-Information zu steuern. Auf diese Weise kann die Absaugeinrichtung automatisch abhängig von Eigenschaften eines angeschlossenen Brenners betrieben werden. Es wurde festgestellt, dass auf diese Weise eine vereinfachte und verbesserte Steuerung der Absaugeinrichtung erreicht werden kann. Insbesondere kann auf diese Weise erreicht werden, dass der Betrieb der Absaugeinrichtung besser an die Eigenschaften des verwendeten Brenners angepasst ist, so dass sich der für den ordnungsgemäßen Betrieb erforderliche Schutzgas-Mantel zuverlässiger einstellen lässt.

Das Erhalten der Brenner-Information erfolgt vorzugsweise über die Anschlussmittel. Beispielsweise kann über die Anschlussmittel eine vom Brenner übermittelte Kennung empfangen und die Brenner-Information abhängig von der empfangenen Kennung bestimmt werden. Weiterhin ist es denkbar, dass die Steuereinrichtung dazu eingerichtet ist, die Brenner-Information abhängig von gemessenen Eigenschaften des Brenners, beispielsweise einer gemessenen Anschlussbelegung oder gemessener charakteristischer elektrischer Eigenschaften des Brenners, zu ermitteln. Auf diese Weise ist eine automatische Erkennung des Brenners möglich.

Daneben ist es aber auch denkbar, dass der Brennertyp über eine Nutzereingabe an einer Nutzerschnittstelle erhalten wird, zum Beispiel indem der Nutzer zur Eingabe des angeschlossenen Brennertyps oder Auswahl des Brennertyps aus einer Liste aufgefordert wird.

Die zuvor genannte Aufgabe wird erfindungsgemäß weiterhin gelöst durch ein System zum Einsatz beim Schweißen oder Löten unter Schutzgasatmosphäre umfassend die zuvor beschriebene Vorrichtung oder eine Ausführungsform davon und einen an die Anschlussmittel der Vorrichtung anschließbaren Brenner mit integrierter Absaugung.

Bei dem Brenner handelt es sich vorzugsweise um einen Handbrenner. Alternativ kann es sich bei dem Brenner auch um einen Brenner für das automatisierte Schweißen, insbesondere Roboterschweißen, handeln. Der Brenner kann insbesondere ein Brennerteil mit einem Handgriff und einem Brennerkopf sowie ein Schlauchpaket zum Anschluss des Brennerteils an die Anschlussmittel der Vorrichtung aufweisen. Das Schlauchpaket kann beispielsweise ein oder mehrere Anschlüsse zur Koppelung an ein oder mehrere Anschlüsse der Anschlussmittel der Vorrichtung aufweisen.

Im Folgenden werden verschiedene Ausführungsformen der Vorrichtung, des Systems und des Verfahrens beschrieben, wobei die einzelnen Ausführungsformen jeweils unabhängig voneinander sowohl für die Vorrichtung und das System als auch für das Verfahren gelten. Weiterhin können die Ausführungsformen beliebig untereinander kombiniert werden.

Bei einer Ausführungsform ist die Steuereinrichtung dazu eingerichtet, die Absaugleistung abhängig von der ermittelten Brenner-Information zu steuern, insbesondere einen von der ermittelten Brenner-Information abhängigen Absaugleistungswert einzustellen. Bei einer entsprechenden Ausführungsform des Verfahrens wird die Absaugleistung der Absaugeinrichtung abhängig von der Brenner-Information gesteuert, insbesondere ein von der ermittelten Brenner-Information abhängiger Absaugleistungswert eingestellt.

Auf diese Weise kann die Absaugleistung automatisch an den angeschlossenen Brenner angepasst werden, so dass zum Beispiel ein stabiler Schutzgasmantel gewährleistet werden kann. Insbesondere erfordern verschiedene Brenner für einen vorgegebenen Absaugluftstrom unterschiedliche Absaugleistungen der Absaugeinrichtung, beispielsweise aufgrund unterschiedlicher Schlauchpaketlängen oder unterschiedlicher Querschnitte der Absaugleitung. Weiterhin können verschiedene Brenner für einen stabilen Schutzgasmantel unterschiedliche Absaugluftströme erfordern, beispielsweise aufgrund unterschiedlich ausgebildeter oder angeordneter Absaugöffnungen am Brennerkopf oder unterschiedlicher Brennerkopfgeometrien. Durch die Steuerung der Absaugeinrichtung abhängig von der Brenner-Information können diese Eigenheiten der unterschiedlichen Brenner automatisch berücksichtigt werden.

Die Steuerung der Absaugleistung kann beispielsweise über den Volumenstrom, beispielsweise über die Steuerung eines Ventils, und/oder über eine Drehzahl eines Rotors der Absaugeinrichtung und/oder über die elektrische Betriebsleistung, mit der die Absaugeinrichtung betrieben wird, gesteuert werden.

Bei dem Absaugleistungswert kann es sich beispielsweise um einen Soll-Wert oder auch um einen unteren und/oder oberen Grenzwert handeln, beispielsweise für den Volumenstrom, für eine Rotordrehzahl der Absaugeinrichtung und/oder für eine elektrische Betriebsleistung. Beispielsweise kann die Absaugeinrichtung eine Regelung für die Absaugleistung aufweisen, deren Soll-Wert bzw. Betriebsbereich abhängig von der ermittelten Brenner-Information eingestellt wird. Ein geeigneter Soll-Wert für den Volumenstrom kann zum Beispiel im Bereich zwischen 20 m³/h und 100 m³/h liegen.

Bei einer Ausführungsform ist die Steuereinrichtung dazu eingerichtet ist, als Brenner-Information den Brennertyp eines im Betrieb an die Anschlussmittel angeschlossenen Brenners zu erhalten und die Absaugeinrichtung abhängig vom ermittelten Brennertyp zu steuern. Bei einer entsprechenden Ausführungsform des Verfahrens wird als Brenner-Information der Brennertyp des angeschlossenen Brenners ermittelt und wird die Absaugeinrichtung abhängig von dem Brennertyp gesteuert. Auf diese Weise ist eine einfache Anpassung des Betriebs der Absaugeinrichtung an einen verschiedene Brennertypen möglich.

Der Brennertyp kann beispielswiese dadurch ermittelt werden, dass über die Anschlussmittel eine den Brennertyp des Brenners identifizierende Brenner-Kennung empfangen wird. Beispielsweise kann eine Brennersteuereinheit des Brenners dazu eingerichtet sein, eine dem Brennertyp zugeordnete Kennung über eine Datenleitung im Schlauchpaket zu übermitteln.

Die Steuereinrichtung kann beispielsweise dazu eingerichtet sein, aus einem vorgesehenen Datenspeicher einen Betriebsparameter, beispielsweise einen Absaugleistungswert, als Funktion des ermittelten Brennertyps auszulesen. Vorzugsweise enthält der Datenspeicher für mehrere Brennertypen einen jeweiligen zugeordneten Betriebsparameter. Auf diese Weise kann die Absaugeinrichtung mit an den Brennertyp angepassten Betriebsparametern betrieben werden.

Bei einer Ausführungsform ist die Steuereinrichtung dazu eingerichtet, ein Brennertastersignal über das Betätigen eines Brennertasters eines im Betrieb an die Anschlussmittel angeschlossenen Brenners zu erhalten und bei Erhalt des Brennertastersignals die Absaugeinrichtung einzuschalten oder deren Absaugleistung für einen Leistungsbetrieb zu erhöhen. Auf diese Weise kann der Nutzer die Absaugeinrichtung manuell starten oder von einem Leerlaufbetrieb mit geringer Drehzahl auf einen Leistungsbetrieb umschalten, bevor er, insbesondere mittels erneuter Betätigung des Brennertasters, mit dem Schweißen bzw. Löten beginnt. Auf diese Weise beginnt der Betrieb bzw. Leistungsbetrieb der Absaugeinrichtung bereits vor Beginn des eigentlichen Schweiß- oder Lötvorgangs, so dass sich der für die gewünschte Absaugströmung erforderliche Unterdruck aufbauen kann und beim anschließenden Beginn eines Schweiß- oder Lötvorgangs die erforderliche Absaugströmung unmittelbar zur Verfügung steht. Zu diesem Zweck kann die Steuereinrichtung vorzugsweise dazu eingerichtet sein, bei Erhalt eines ersten Brennertastersignals die Absaugeinrichtung einzuschalten oder deren Absaugleistung für einen Leistungsbetrieb zu erhöhen und bei Erhalt eines nachfolgenden zweiten Brennertastersignals den Beginn eines Schweiß- und/oder Lötvorgangs zu bewirken.

Bei einer Ausführungsform umfassen die Anschlussmittel einen Absauganschluss zum Anschließen einer Absaugleitung eines an die Anschlussmittel angeschlossenen Brenners. Umfasst die Vorrichtung eine Stromquelle zur Bereitstellung eines Schweißoder Lötstroms, so kann die Absaugeinrichtung beispielsweise in die Stromquelle integriert und der Absauganschluss an der Stromquelle angeordnet sein. Ist die Absaugeinrichtung als gesondertes Gerät ausgebildet, so kann der Absauganschluss insbesondere direkt an der Absaugeinrichtung angeordnet sein.

An eine solche Vorrichtung mit einem Absauganschluss kann zum Beispiel ein Brenner angeschlossen werden, dessen Schlauchpaket mehrere Anschlüsse aufweist, insbesondere einen Anschluss zum Anschließen des Schlauchpakets an einen Brenneranschluss eines Drahtvorschubgeräts und einen weiteren Anschluss zum Anschließen des Schlauchpakets an den Absauganschluss.

Bei einer Ausführungform weist die Vorrichtung eine Stromquelle zur Bereitstellung eines Schweiß- oder Lötstroms auf. Die Absaugeinrichtung kann beispielsweise in die Stromquelle integriert sein.

Bei einer Ausführungsform umfasst die Vorrichtung ein Drahtvorschubgerät und die Anschlussmittel umfassen einen Brenneranschluss am Drahtvorschubgerät. Der Brenneranschluss dient insbesondere zur Bereitstellung des mit dem Drahtvorschubgerät geförderten Schweiß- oder Lötdrahts. Weiterhin kann der Brenneranschluss zur Bereitstellung eines Schutzgasstroms ausgebildet sein. Weiterhin kann der Brenneranschluss zur Bereitstellung des von der Schweißstromquelle bereitgestellten Schweiß- oder Lötstroms eingerichtet sein.

Das Drahtvorschubgerät weist vorzugsweise eine Steuereinheit auf. Beispielsweise kann die Steuereinrichtung der Vorrichtung durch die Steuereinheit des Drahtvorschubgeräts gebildet werden oder diese umfassen. Insbesondere kann die Steuereinheit des Drahtvorschubgeräts mit der Absaugeinrichtung, insbesondere einer Steuereinrichtung der Absaugeinrichtung über eine Datenverbindung verbunden sein.

Bei einer Ausführungsform ist die Steuereinrichtung dazu eingerichtet, die Absaugleistung zu Beginn des Betriebs oder Leistungsbetriebs der Absaugeinrichtung zunächst auf einen Start-Absaugleistungswert einzustellen und danach abzusenken. Auf diese Weise wird die Absaugeinrichtung zunächst mit hoher Start-Absaugleistung betrieben, um den für die Bereitstellung des Absaugluftstroms erforderlichen Unterdruck schneller aufzubauen zu können. Dadurch kann die Zeitspanne zwischen dem Start der Absaugeinrichtung bzw. dem Beginn des Leistungsbetriebs der Absaugeinrichtung und dem Erreichen der gewünschten Absaugleistung bzw. des gewünschten Absaugluftstroms verkürzt werden. Die Start-Absaugleistung kann abhängig oder unabhängig von der Brenner-Information eingestellt werde. Beispielsweise kann die Steuereinrichtung dazu eingerichtet sein, die Absaugeinrichtung für eine bestimmte Zeitdauer mit dem Start-Absaugleistungswert zu betreiben, bevor die Absaugleistung abgesenkt wird.

Das Absenken der Absaugleistung erfolgt vorzugsweise auf eine Soll-Absaugleistung bzw. einen Soll-Absaugluftstrom, der abhängig von der Brenner-Information eingestellt wird. Insbesondere kann die Steuereinrichtung hierzu eingerichtet sein.

Weitere Vorteile und Merkmale der Vorrichtung, des Systems und des Verfahren ergeben sich aus der nachfolgenden Beschreibung von Ausführungsbeispielen, wobei Bezug auf die beigefügte Zeichnung genommen wird.

In der Zeichnung zeigen
- Fig. 1a-b: ein Ausführungsbeispiel der Vorrichtung und des Systems,
- Fig. 2: das Ausführungsbeispiel aus Fig. 1a-b in abstrahierter Darstellung,
- Fig. 3: ein Diagramm zu einem Ausführungsbeispiel des Verfahrens mit den Vorrichtungen aus Fig. 2 und 5,
- Fig.4: ein weiteres Ausführungsbeispiel der Vorrichtung und des Systems und
- Fig. 5: das Ausführungsbeispiel aus Fig. 4 in abstrahierter Darstellung.

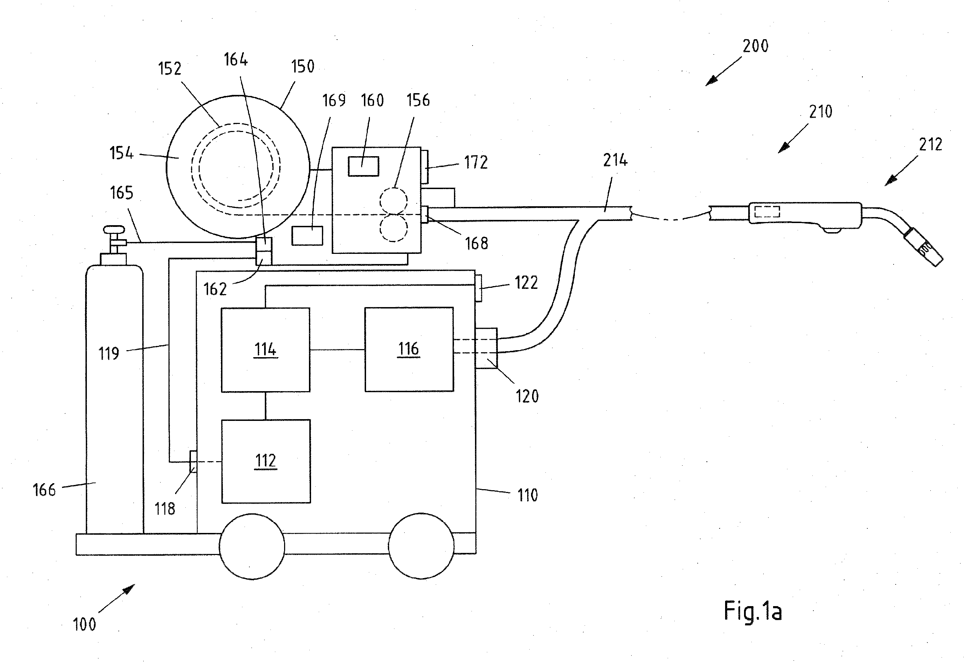

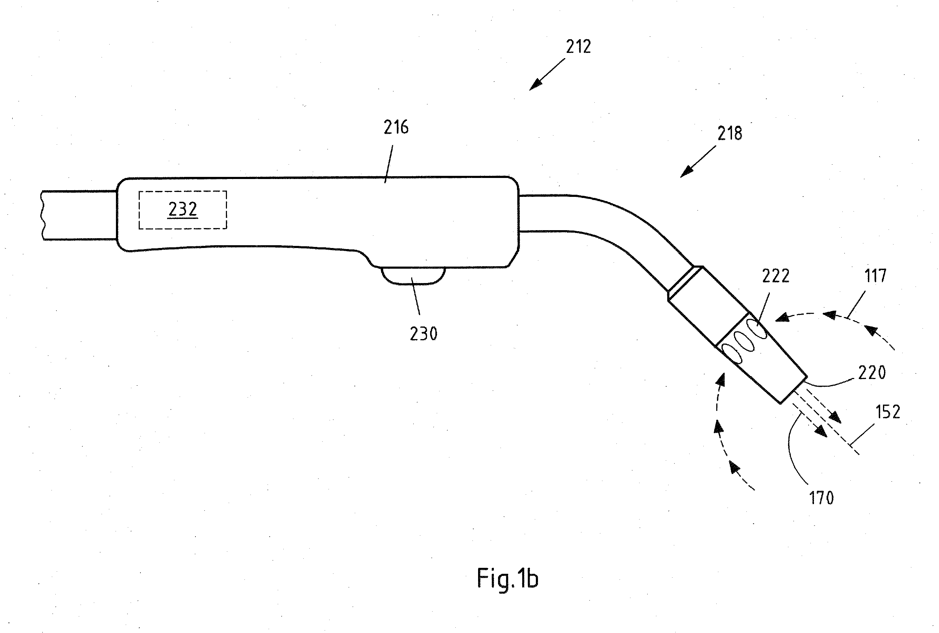

Die Fig. 1a-b zeigen ein Ausführungsbeispiel der Vorrichtung und des Systems in schematischer Darstellung. Fig. 1a zeigt eine schematische Ansicht der Vorrichtung 100 und des Sytems 200. Fig. 1b zeigt eine schematische Detailansicht aus Fig. 1a.

Die Vorrichtung 100 ist im vorliegenden Ausführungsbeispiel als Vorrichtung zum Einsatz beim Schweißen ausgebildet und wird im Folgenden entsprechend beschrieben. Alternativ ist es auch denkbar, die Vorrichtung 100 in entsprechender Weise als Vorrichtung zum Einsatz beim Löten auszubilden.

Weiterhin ist die Vorrichtung 100 im vorliegenden Ausführungsbeispiel zum Einsatz beim Metallschutzgas-(MSG)-schweißen ausgebildet, beispielsweise zum Metallinertgas-(MIG)- oder zum Metallaktivgas-(MAG)-Schweißen. Die Vorrichtung 100 könnte alternativ aber auch zum Einsatz beim WIG-Schweißen oder Plasmaschweißen ausgebildet sein.

Die Vorrichtung 100 umfasst eine Schweißstromquelle 110 zur Bereitstellung eines Schweißstroms mit einem Leistungsteil 112, einer Steuereinheit 114 und einer in die Schweißstromquelle 110 integrierten Absaugeinrichtung 116. Die Steuereinheit 114 ist zur Steuerung der Schweißstromquelle 110 eingerichtet und steuert insbesondere das Leistungsteil 112 und die Absaugeinrichtung 116. Das Leistungsteil 112 ist dazu eingerichtet, einen Schweißstrom zum Schweißen über einen elektrischen Ausgang 118 der Schweißstromquelle 110 bereitzustellen. Weiterhin weist die Schweißstromquelle 110 einen Absauganschluss 120 für eine Absaugleitung auf, wobei die Absaugeinrichtung 116 dazu eingerichtet ist, einen Unterdruck bzw. Absaugluftstrom 117 über den Absauganschluss 120 bereitzustellen.

Die Vorrichtung 100 umfasst weiter ein Drahtvorschubgerät 150 zum Transport eines Schweißdrahts 152. Das Drahtvorschubgerät 150 weist einen Schweißdrahtvorrat 154 in Form einer Schweißdrahttrommel, eine Schweißdrahtfördereinrichtung 156, die vorzugsweise angetriebene Rollen zur kontrollierten Förderung des Schweißdrahts 152 umfasst, und eine Steuereinheit 160, die zur Steuerung des Drahtvorschubgeräts 150 ausgebildet ist, auf.

Das Drahtvorschubgerät 150 weist weiter einen elektrischen Eingang 162 zum Einspeisen des von der Schweißstromquelle 110 bereitgestellten Schweißstroms auf, der für den Betrieb über eine elektrische Leitung 119 mit dem elektrischen Ausgang 118 der Schweißstromquelle verbunden wird. Weiter weist das Drahtvorschubgerät 150 einen Schutzgas-Einlass 164 zum Einspeisen eines Schutzgases auf, der für den Betrieb über eine Gasleitung 165 mit einer Schutzgasquelle 166, wie zum Beispiel einer Gasflasche, verbunden wird.

Das Drahtvorschubgerät 150 weist weiter einen Brenneranschluss 168 zum Anschließen eines Schweißbrenners 210 auf. Über den Brenneranschluss 168 werden der von der Schweißdrahtfördereinrichtung 156 geförderte Schweißdraht 152, der von der Schweißstromquelle 110 bereitgestellte Schweißstrom und das von der Schutzgasquelle 166 bereitgestellte Schutzgas für den Schweißbrenner 210 bereitgestellt.

Die Steuereinheit 160 ist insbesondere zur Steuerung der Schweißdrahtfördereinrichtung 156 eingerichtet. Weiterhin kann die Steuereinheit 160 dazu eingerichtet sein, den am Brenneranschluss 168 bereitgestellten Schutzgasstrom zu steuern. Zu diesem Zweck kann das Drahtvorschubgerät 150 zwischen dem Schutzgas-Einlass 164 und dem Brenneranschluss 168 ein zum Beispiel steuerbares Ventil 169 aufweisen, mit dem sich der Schutzgasstrom einstellen lässt.

Die Steuereinheit 114 der Schweißstromquelle 110 und die Steuereinheit 160 des Drahtvorschubgeräts 150 sind vorzugsweise über eine Kommunikationsverbindung miteinander verbunden, zum Beispiel über die Leitung 119 oder über eine gesonderte Datenleitung, so dass eine der beiden Steuereinheiten 114,160 Steuerbefehle an die jeweilige andere der beiden Steuereinheiten 114,160 übertragen kann. Auf diese Weise kann beispielsweise die Steuereinheit 114 dazu eingerichtet sein, sowohl die Schweißstromquelle 110 als auch das Drahtvorschubgerät 150 zu steuern. Die Steuereinheit 114 und die Steuereinheit 160 bilden gemeinsam eine Steuereinrichtung 190 der Vorrichtung 100.

An der Schweißstromquelle 110 und/oder an dem Drahtvorschubgerät 150 ist vorzugsweise eine jeweilige Nutzerschnittstelle 122,172 vorgesehen, über die der Nutzer Betriebsinformationen ablesen und/oder Steuerbefehle eingeben kann.

Das System 200 umfasst die Vorrichtung 100 und einen an die Vorrichtung 100 angeschlossenen Schweißbrenner 210. Der Schweißbrenner 210 weist ein Brennerteil 212 und ein Schlauchpaket 214 auf, mit dem das Brennerteil 212 an die Vorrichtung 100 angeschlossen ist. Fig. 1b zeigt eine schematische Detailansicht des Brennerteils 212.

Das Schlauchpaket 214 ist an den Brenneranschluss 168 des Drahtvorschubgeräts 150 angeschlossen, so dass im Betrieb der von der Schweißdrahfördereinrichtung 156 geförderte Schweißdraht 152 über den Brenneranschluss 168 durch eine durch das Schlauchpaket 214 verlaufende Hohlleitung zum Brennerteil 212 geführt wird und weiter der von der Schweißstromquelle 110 bereitgestellte und durch das Drahtvorschubgerät 150 geschleifte Schweißstrom über den Brenneranschluss 168 durch eine durch das Schlauchpaket 214 verlaufende elektrische Leitung zum Brennerteil 212 geleitet wird, wo der Schweißstrom über eine Kontaktierung auf den Schweißdraht 152 geleitet wird. Weiterhin wird im Betrieb der am Brenneranschluss 168 bereitgestellte Schutzgasstrom durch eine durch das Schlauchpaket 214 verlaufende Schutzgasleitung zum Brennerteil 212 geleitet, um dort einen Schutzgasmantel für den Schweißvorgang zu erzeugen.

Das Schlauchpaket 214 ist weiterhin über eine Abzweigung an den Absauganschluss 120 der Schweißstromquelle 110 angeschlossen, so dass im Betrieb ein von der Absaugeinrichtung 116 bewirkter Absaugluftstrom 117 über eine durch das Schlauchpaket 214 verlaufende Absaugleitung am Brennerteil 212 bereitgestellt werden kann.

Der Brenneranschluss 168 des Drahtvorschubgeräts 150 und der Absauganschluss 120 der Schweißstromquelle bilden zusammen Anschlussmittel 180 der Vorrichtung 100 zum Anschluss des Brenners 210.

Das Brennerteil 212 umfasst einen Handgriff 216 und einen Brennerkopf 218 mit einer Öffnung 220, aus dem im Betrieb der mit dem Schweißstrom beaufschlagte Schweißdraht 152 herausgeführt wird und der Schutzgasstrom 170 austritt.

Der Brennerkopf 218 weist weiterhin Absaugöffnungen 222 auf, die über das Schlauchpaket 214 und den Absauganschluss 120 mit der Absaugeinrichtung 116 verbunden sind, so dass im Betrieb ein Absaugluftstrom 117 am Brennerkopf 218 bereitgestellt wird, mit dem beim Schweißen entstehende Rauchgase durch den Brennerkopf 218 abgesaugt werden.

Am Handgriff 216 des Brennerteils 212 ist ein Brennertaster 230 vorgesehen. Bei einfachen Schweißbrennern sind die Anschlusspole des Brennertasters über zwei durch das Schlauchpaket 214 verlaufende elektrische Brennertaster-Leitungen mit entsprechenden Kontakten am Brenneranschluss 168 verbunden, so dass die Steuereinrichtung 190 die Betätigung des Brennertasters 230 feststellen und zum Beispiel bei Betätigung des Brennertasters 230 einen Schweißvorgang starten kann. Bei technisch weiter entwickelten Schweißbrennern mit einer eigenen Brennersteuereinheit 232 kann der Brennertaster zusätzlich oder alternativ mit der Brennersteuereinheit 232 verbunden sein. Die Brennersteuereinheit 232 kann über die Brennertaster-Leitungen und/oder über gesonderte durch das Schlauchpaket verlaufende Datenleitungen und Kontakte am Brenneranschluss 168 oder Absauganschluss 120 mit der Steuereinrichtung 190 verbunden sein.

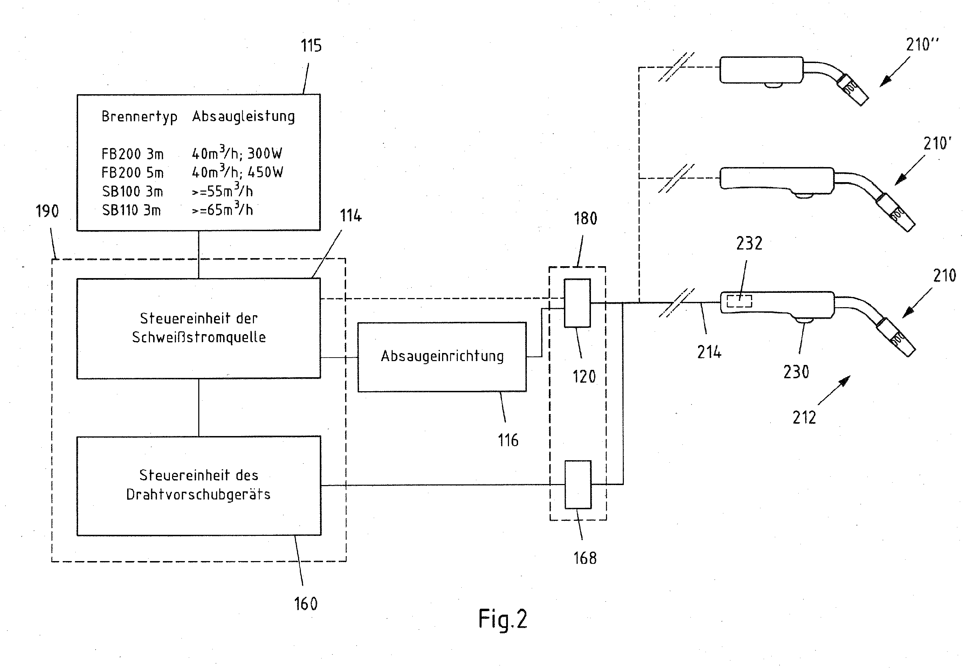

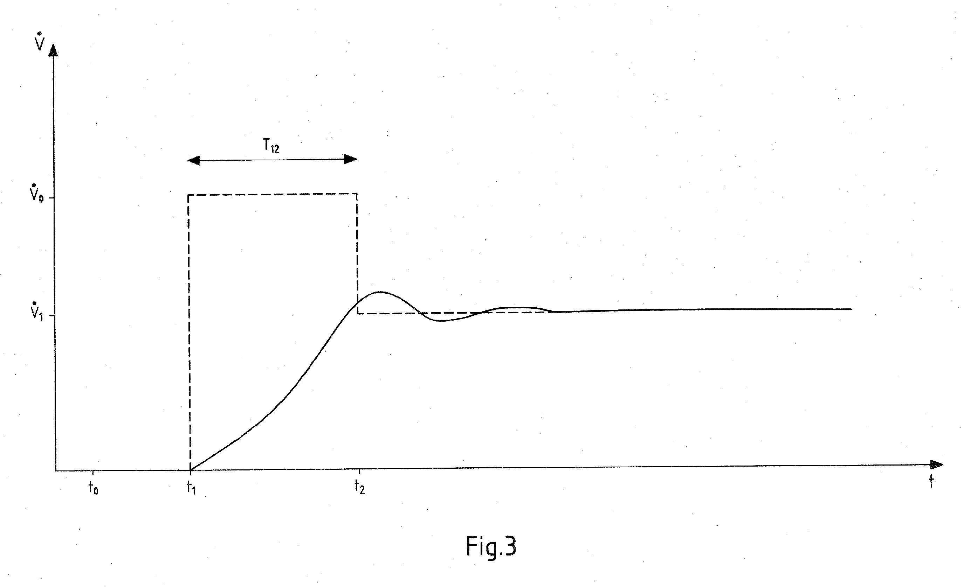

Die Funktionsweise der Vorrichtung 100 und des Systems 200 zur Steuerung der Absaugeinrichtung 116 wird nachfolgend anhand der Figuren 2 und 3 erläutert.

Fig. 2 zeigt die Steuereinheit 114 der Schweißstromquelle 110, einen damit verbundenen Datenspeicher 115, die mit der Steuereinheit 114 verbundene Absaugeinrichtung 116 sowie den Absauganschluss 120, an den der Schweißbrenner 210 angeschlossen ist. Weiterhin zeigt Fig. 2 die Steuereinheit 160 des Drahtvorschubgeräts 150 sowie den Brenneranschluss 168, an den der Schweißbrenner 210 ebenfalls angeschlossen ist. Der Absauganschluss 120 und der Brenneranschluss 168 bilden gemeinsam die Anschlussmittel 180 der Vorrichtung 100 für den Schweißbrenner 210. Die Steuereinheiten 114 und 160 bilden gemeinsam die Steuereinrichtung 190 der Vorrichtung 100.

Die Brennersteuereinheit 232 des Schweißbrenners 210 ist dazu eingerichtet, eine Brenner-Information in Form einer Brenner-Kennung über eine Datenleitung im Schlauchpaket 214 zu senden, die zum Beispiel über einen entsprechenden Kontakt am Brenneranschluss 168 oder am Absauganschluss 120 von der Steuereinrichtung 190 erhalten wird.

Die Steuereinrichtung 190 ist dazu eingerichtet, aus der Brenner-Kennung den Brennertyp des Schweißbrenners 210 zu ermitteln. Der Brennertyp kann beispielsweise in der Brenner-Kennung codiert sein. Weiterhin ist denkbar, dass auf dem Datenspeicher 115 eine Konkordanztabelle gespeichert ist, die verschiedenen Brenner-Kennungen einen zugehörigen Brennertyp zuordnet, so dass die Steuereinrichtung 190 durch Zugriff auf die Konkordanztabelle den Brennertyp des Schweißbrenners 210 ermitteln kann.

Die Steuereinrichtung 190 ist weiter dazu eingerichtet, die Absaugeinrichtung 116 abhängig vom ermittelten Brennertyp zu steuern. Zu diesem Zweck kann die Steuereinrichtung 190 beispielsweise auf eine im Datenspeicher 115 gespeicherte Liste 124 oder Datenbank zugreifen, in der mehreren Brennertypen jeweilige Absaugleistungswerte, zum Beispiel in Form von Volumenstromwerten, zugeordnet sind, wie exemplarisch in Fig. 2 dargestellt ist. Bei den Volumenstromwerten kann es sich beispielsweise um Soll-Volumenstromwerte oder um Mindest- und/oder Maximal-Volumentromwerte handeln. Die Steuerung der Absaugeinrichtung 116 durch die Steuereinrichtung 190 erfolgt dann mit dem aus dem Datenspeicher 115 ausgelesenen Absaugleistungswert für den ermittelten Brennertyp.

Auf diese Weise kann der Betrieb der Absaugeinrichtung 116 automatisch an den jeweils angeschlossenen Schweißbrenner angepasst werden. Handelt es sich im vorliegenden Ausführungsbeispiel bei dem angeschlossenen Schweißbrenner 210 um einen Schweißbrenner vom Brennertyp "FB200 3m", wobei "FB200" den Typ des Brennerteils und "3m" die Länge des Schlauchpakets bezeichet, so wird die Absaugeinrichtung mit einem Soll-Volumenstromwert von 40 m³/h und einer Soll-Betriebsleistung von 300 W gesteuert. Wird der Schweißbrenner 210 nun gegen einen Schweißbrenner 210' vom Typ "FB200 5m" (in Fig. 2 gestrichelt dargestellt) getauscht, der sich dem Brenner vom Typ "FB200 3m" lediglich durch die größere Schlauchpaketlänge unterscheidet, wird die Absaugeinrichtung gemäß Fig. 2 mit dem gleichen Soll-Volumenstromwert von 40 m³/h, aber mit einer höheren Soll-Betriebsleistung von 450 W gesteuert, um die größere Schlauchpaketlänge und damit den angestiegenen Druckabfall innerhalb des Schlauchpakets zu kompensieren.

Für einen Schweißbrenner 210" vom Typ "SB100 3m" (in Fig. 2 gestrichelt dargestellt) ist anstelle eines Soll-Volumenstromwerts ein Mindest-Volumenstromwert von 45 m³/h vorgegeben, mit dem die Absaugeinrichtung 116 gesteuert wird. Im Datenspeicher 115 können auch noch für weitere Brenner Werte für die Absaugleistung gespeichert sein, beispielsweise der in Fig. 2 dargestellte Mindest-Volumenstromwert von 55 m³/h für den Schweißbrenner vom Typ "SB110 3m", der zum Beispiel eine andere Brennerkopfgeometrie aufweisen kann als der Brenner "SB100 3m" und daher eine anderen Mindest-Volumenstromwert erfordert.

Fig. 3 illustriert eine mögliche Steuerung der Absaugeinrichtung durch die Steuereinrichtung 190. Auf der Abszisse ist die Zeit t und auf der Ordinate der Volumenstrom V aufgetragen. Die gestrichelte Linie zeigt den von der Steuereinrichtung 190 an der Absaugeinrichtung 116 eingestellten Volumenstrom (Soll-Wert). Die durchgezogene Linie zeigt den tatsächlichen Volumenstrom (Ist-Wert).

Zum Zeitpunkt t0 wird der Schweißbrenner 210 an die Anschlussmittel 180 angeschlossen. Wie zuvor beschrieben erhält die Steuereinrichtung 190 die der Brennersteuereinheit 232 gesendete Brenner-Kennung und ermittelt damit in diesem Beispiel einen Soll-Volumenstromwert V̇1 von 40 m³/h.

Zum Zeitpunkt t₁ erhält die Steuereinrichtung 190 vom Schweißbrenner 210 ein Brennertastersignal über die Betätigung des Brennertasters 230. Die Steuereinrichtung 190 ist dazu eingerichet, beim Erhalt des Brennertastersignals die Absaugeinrichtung 116 einzuschalten, wenn diese noch ausgeschaltet ist. Weiterhin ist die Steuereinrichtung 190 dazu eingerichtet, die Absaugleistung der Absaugeinrichtung 116 zunächst für eine Zeitdauer T₁₂ auf einen Start-Absaugleistungswert einzustellen, in Fig. 3 als Start-Volumenstromwert V̇₀ angegeben, bevor die Absaugleistung zum Zeitpunkt t₂ auf den Soll-Volumenstromwert V̇₁ abgesenkt wird. Auf diese Weise wird zunächst ein hoher Start-Volumenstromwert eingestellt, der ein schnelleres Anlaufen der Absaugeinrichtung 116 bewirkt, so dass der gewünschte Soll-Volumenstromwert V̇₁ schneller erreicht wird. Entsprechend zeigt der in Fig. 3 als durchgezogene Linie dargestellte Ist-Wert der Absaugleistung ab dem Zeitpunkt t₁ einen recht steilen Anstieg. Bei der Umstellung des vorgegebenen Soll-Werts zum Zeitpunkt t₂ zeigt der Ist-Wert sodann einen durch die VolumenstromRegelung der Absaugeinrichtung 116 bewirkten Verlauf zum Soll-Volumenstromwert Vi.

Die Zeitdauer T₁₂ kann vorgegeben sein. Alternativ kann die Zeitdauer T₁₂ abhängig vom Ist-Wert der Absaugleistung gewählt werden. Beispielsweise kann die Steuereinrichtung 190 vom Start-Volumenstromwert V̇0 auf den Soll-Volumenstromwert V̇₁ umstellen, wenn der Ist-Wert den Soll-Volumenstromwert V̇₁ überschritten hat.

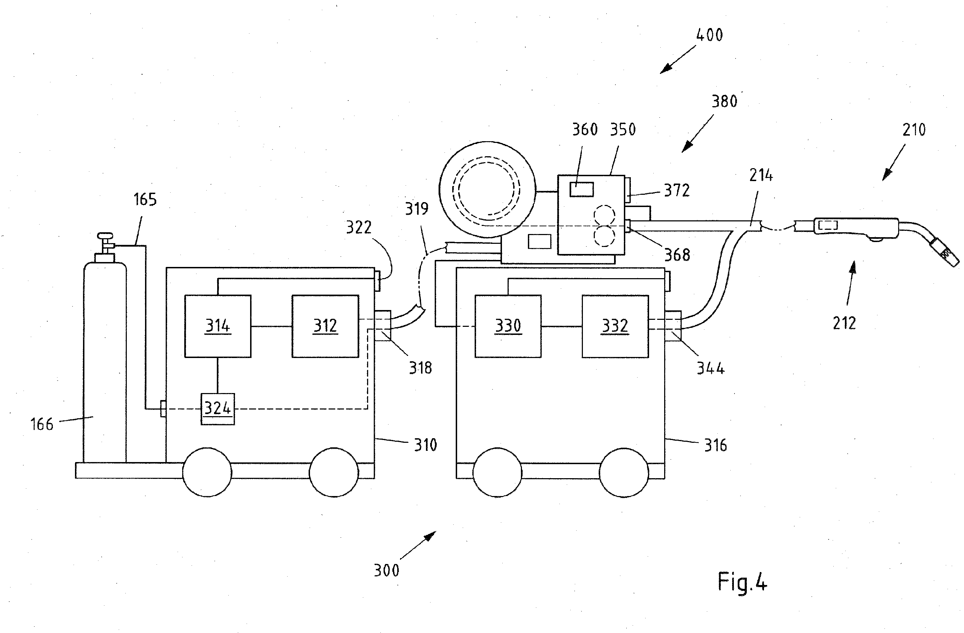

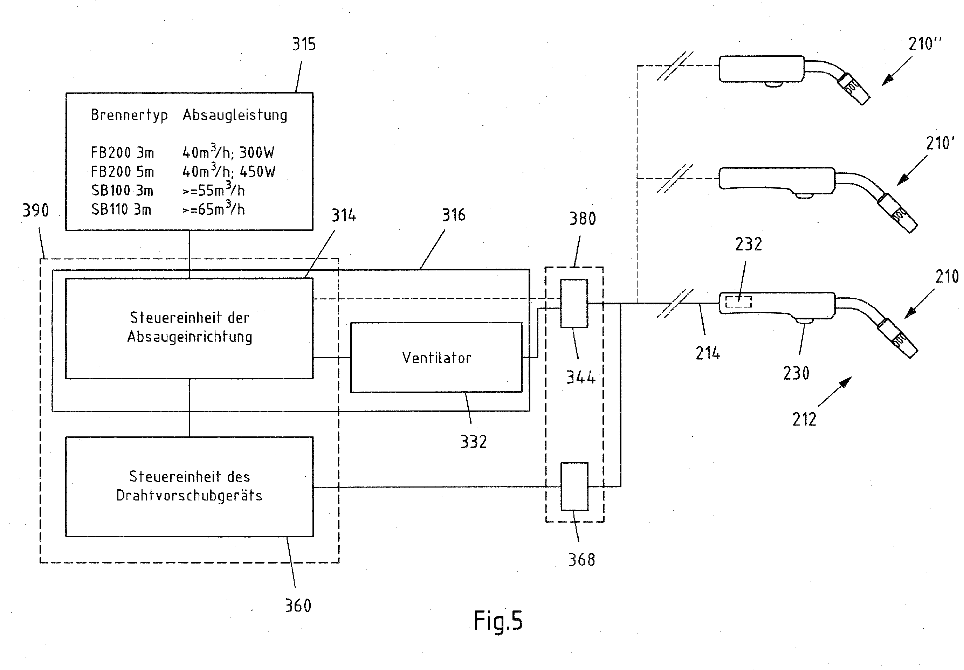

Fig. 4 zeigt ein weiteres Ausführungsbeispiel der Vorrichtung und des Systems in einer der Fig. 1a entsprechenden schematischen Darstellung. Weiterhin zeigt Fig. 5 eine der Fig. 2 entsprechende Darstellung für das weitere Ausführungsbeispiel.

Die Vorrichtung 300 und die Vorrichtung 100 weisen einen ähnlichen Aufbau und eine ähnliche Funktionsweise auf, so dass im Folgenden vor allem die Unterschieden zwischen den beiden Vorrichtungen beschrieben werden und im Übrigen auf die obige Beschreibung verwiesen wird.

Die Vorrichtung 300 ist im vorliegenden Ausführungsbeispiel als Vorrichtung zum Einsatz beim Schweißen ausgebildet und wird im Folgenden entsprechend beschrieben. Alternativ ist es auch denkbar, die Vorrichtung 300 in entsprechender Weise als Vorrichtung zum Einsatz beim Löten auszubilden.

Weiterhin ist die Vorrichtung 300 im vorliegenden Ausführungsbeispiel zum Einsatz beim Metallschutzgas-(MSG)-schweißen ausgebildet, beispielsweise zum Metallinertgas-(MIG)- oder zum Metallaktivgas-(MAG)-Schweißen. Die Vorrichtung 300 könnte alternativ aber auch zum Einsatz beim WIG-Schweißen oder Plasmaschweißen ausgebildet sein.

Die Vorrichtung 300 unterscheidet sich dadurch von der Vorrichtung 100, dass die Absaugeinrichtung 316 als von der Schweißstromquelle 310 separates Absauggerät 317 ausgebildet ist. Die Vorrichtung 300 umfasst das Absauggerät 317 sowie ein im Betrieb damit verbundenes Drahtvorschubgerät 350. Die Schweißstromquelle ist vorliegend separat ausgebildet und nicht Teil der Vorrichtung 300.

Die Schweißstromquelle 310 weist wie die Schweißstromquelle 110 ein Leistungsteil 312, eine Steuereinheit 314 und eine Nutzerschnittstelle 322 auf. Weiterhin weist die Schweißstromquelle 310 einen Anschluss 318 für ein Schlauchpaket 319 zum Drahtvorschubgerät 350 auf. Über den Anschluss 318 werden der Schweißstrom vom Leistungsteil 312 sowie der durch die Schweißstromquelle 310 geleitete und zum Beispiel durch ein steuerbares Ventil 324 der Schweißstromquelle 310 gesteuerte Schutzgasstrom bereitgestellt.

Das Absauggerät 317 weist eine Steuereinheit 330, einen von der Steuereinheit 330 gesteuerten Ventilator 332 zur Erzeugung des Absaug-Volumenstroms, einen Absauganschluss 344 sowie eine Nutzerschnittstelle 336 auf. Der Schweißbrenner 210 ist über das Schlauchpaket 214 an dem Brenneranschluss 368 des Drahtvorschubgeräts 350 sowie an dem Absauganschluss 344 des Absauggeräts 317 angeschlossen. Der Brenneranschluss 368 und der Absauganschluss 344 bilden gemeinsam die Anschlussmittel 380 der Vorrichtung 300. Die Steuereinrichtung 390 der Vorrichtung 300 umfasst die Steuereinheit 330. Darüber hinaus kann die Steuereinrichtung 390 optional auch die Steuereinheit 360 des Drahtvorschubgeräts 350 umfassen.

Die Steuereinrichtung 390 ist dazu eingerichtet, eine Brenner-Information, insbesondere eine Brenner-Kennung über einen im Betrieb an die Anschlussmittel 380 angeschlossenen Brenner, wie zum Beispiel den Brenner 210, zu erhalten, insbesondere zu empfangen. Zu diesem Zweck kann beispielsweise am Absauganschluss 344 ein Kontakt zur Kontaktierung einer Datenleitung im Schlauchpaket 214 vorgesehen sein, über den eine vom Brenner 210 gesandte Brenner-Kennung von der Steuereinheit 330 empfangen werden kann. Alternativ kann auch am Brenneranschluss 368 ein Kontakt zur Kontaktierung einer Datenleitung im Schlauchpaket 214 vorgesehen sein, über den eine vom Brenner 210 gesandte Brenner-Kennung von der Steuereinheit 360 des Drahtvorschubgeräts 350 empfangen werden kann, die die Brenner-Kennung über eine Datenverbindung 372 zur Steuereinheit 330 weiterleitet.

Die Steuereinrichtung 390, insbesondere die Steuereinheit 330, ist weiter dazu eingerichtet, die Absaugeinrichtung 316, insbesondere den Ventilator 332, abhängig von der Brenner-Kennung zu steuern. Die Steuerung der Absaugeinrichtung 316, insbesondere des Ventilators 332 abhängig von der Benutzer-Kennung kann in ähnlicher Weise erfolgen, wie anhand der Figuren 2 und 3 für die Vorrichtung 100 beschrieben worden ist, auf die hier verwiesen wird. Zu diesem Zweck kann die Steuereinheit 330 der Absaugeinrichtung 316 mit einem Datenspeicher 315 entsprechend dem Datenspeicher 115 verbunden sein.

Die Vorrichtung 300 und der daran angeschlossene Brenner 210 bilden gemeinsam das System 400.

Die Ausbildung der Absaugeinrichtung 316 als gesondertes Absauggerät 317 hat den Vorteil, dass dieses nahe am Drahtvorschubgerät 350 angeordnet werden kann, auch wenn das Drahtvorschubgerät 350 über ein langes Schlauchpaket 319 weit von der Schweißstromquelle 310 entfernt ist.

Mit den zuvor beschriebenen Vorrichtungen 100, 300, den Systemen 200, 400 und den beschrieben Verfahren lässt sich die Steuerung der Absaugung vereinfachen bzw. verbessern. Insbesondere kann die Absaugleistung automatisch abhängig vom jeweils angeschlossenen Brenner eingestellt und somit besser an diesen angepasst werden, so dass eine zuverlässige Absaugung von Abgasen, insbesondere Rauchgasen von der Schweiß- bzw. Lötstelle bewirkt wird und gleichzeitig ein stabiler Schutzgasmantel ermöglicht wird.

**Bezugszeichenliste:**

| | | | |
|---|---|---|---|
| 100, 300: | Vorrichtung | 170: | Schutzgasstrom |
| 110, 310: | Schweißstromquelle | 172, 372: | Nutzerschnittstelle des Drahtvorschubgeräts |
| 112, 312: | Leistungsteil | | |
| 114, 314: | Steuereinheit der Schweißstromquelle | 180, 380: | Anschlussmittel |
| | | 190, 390: | Steuereinrichtung |
| 115, 315: | Datenspeicher | 200, 400: | System |
| 116, 316: | Absaugeinrichtung | 210, 210', 210": | Schweißbrenner |
| 117: | Absaugluftstrom | | |
| 118: | elektrischer Ausgang der Schweißstromquelle | 212: 214, 319: | Brennerteil Schlauchpaket |
| 119: | elektrische Leitung | 216: | Handgriff |
| 120, 344: | Absauganschluss | 218: | Brennerkopf |
| 122: | Nutzerschnittstelle der Schweißstromquelle | 220: 222: | Öffnung Absaugöffnungen |
| 150, 350: | Drahtvorschubgerät | 230: | Brennertaster |
| 152: | Schweißdraht | 232: | Brennersteuereinheit |
| 154: | Schweißdrahtvorrat | 317: | Absauggerät |
| 156: | Schweißdrahfördereinrichtung | 318: | Anschluss der Schweißstromquelle für ein Schlauchpaket |
| 160, 360: | Steuereinheit des Drahtvorschubgeräts | | |
| 162: | elektrischer Eingang | 330: | Steuereinheit des Absauggeräts |
| 164: | Schutzgas-Einlass | | |
| 165: | Gasleitung | 332: | Ventilator |
| 166: | Schutzgasquelle | 336: | Nutzerschnittstelle des Absauggeräts |
| 168,368: | Brenneranschluss | | |
| 169,324: | Ventil | 372: | Datenverbindung |

## Patentansprüche

1. Vorrichtung (100, 300) zum Einsatz beim Schweißen oder Löten unter Schutzgasatmosphäre,
- mit Anschlussmitteln (180, 380) zum Anschließen eines Brenners (210, 210', 210") mit integrierter Absaugung,
- mit einer Absaugeinrichtung (116, 316) zur Bereitstellung eines Absaugluftstroms über die Anschlussmittel (180, 380) und
- mit einer Steuereinrichtung (190, 390),
**dadurch gekennzeichnet,**
- **dass** die Steuereinrichtung (190, 390) dazu eingerichtet ist, eine Brenner-Information über einen im Betrieb an die Anschlussmittel (180, 380) angeschlossenen Brenner (210, 210', 210") zu erhalten und die Absaugeinrichtung (116, 316) abhängig von der erhaltenen Brenner-Information zu steuern.

2. Vorrichtung nach Anspruch 1,
**dadurch gekennzeichnet, dass** die Steuereinrichtung (190, 390) dazu eingerichtet ist, die Absaugleistung abhängig von der erhaltenen Brenner-Information zu steuern, insbesondere einen von der erhaltenen Brenner-Information abhängigen Absaugleistungswert einzustellen.

3. Vorrichtung nach Anspruch 1 oder 2,
**dadurch gekennzeichnet, dass** die Steuereinrichtung (190, 390) dazu eingerichtet ist, als Brenner-Information den Brennertyp eines im Betrieb an die Anschlussmittel (180, 380) angeschlossenen Brenners (210, 210', 210") zu erhalten und die Absaugeinrichtung (116, 316) abhängig vom ermittelten Brennertyp zu steuern.

4. Vorrichtung nach einem der Ansprüche 1 bis 3,
**dadurch gekennzeichnet, dass** die Steuereinrichtung (190, 390) dazu eingerichtet ist, ein Brennertastersignal über das Betätigen eines Brennertasters (230) eines im Betrieb an die Anschlussmittel (180, 380) angeschlossenen Brenners (210, 210', 210") zu erhalten und bei Erhalt des Brennertastersignals die Absaugeinrichtung (116, 316) einzuschalten oder deren Absaugleistung für einen Leistungsbetrieb zu erhöhen.

5. Vorrichtung nach einem der Ansprüche 1 bis 4,
**dadurch gekennzeichnet, dass** die Anschlussmittel (180, 380) einen Absauganschluss (120, 344) zum Anschließen einer Absaugleitung eines im Betrieb an die Anschlussmittel (180, 380) angeschlossenen Brenners (210, 210', 210") umfassen.

6. Vorrichtung nach einem der Ansprüche 1 bis 5,
**dadurch gekennzeichnet, dass** die Vorrichtung eine Stromquelle (110, 310) zur Bereitstellung eines Schweiß- oder Lötstroms aufweist.

7. Vorrichtung nach einem der Ansprüche 1 bis 6,
**dadurch gekennzeichnet, dass** die Vorrichtung (100, 300) ein Drahtvorschubgerät (150, 350) umfasst und die Anschlussmittel (180, 380) einen Brenneranschluss (168, 368) am Drahtvorschubgerät (150, 350) umfassen.

8. Vorrichtung nach einem der Ansprüche 1 bis 7,
**dadurch gekennzeichnet, dass** die Steuereinrichtung (190, 390) dazu eingerichtet ist, die Absaugleistung zu Beginn des Betriebs oder Leistungsbetriebs der Absaugeinrichtung (116, 316) zunächst auf einen Start-Absaugleistungswert (V̇₀) einzustellen und danach abzusenken.

9. System (200, 400) zum Einsatz beim Schweißen oder Löten unter Schutzgasatmosphäre,
- umfassend eine Vorrichtung (100, 300) nach einem der Ansprüche 1 bis 8 und
- einen an die Anschlussmittel (180, 380) der Vorrichtung (100, 300) anschließbaren Brenner (210, 210', 210") mit integrierter Absaugung.

10. Verfahren zum Steuern einer Absaugeinrichtung (116, 316) einer Vorrichtung (100, 300) zum Einsatz beim Schweißen oder Löten unter Schutzgasatmosphäre, insbesondere einer Vorrichtung nach einem der Ansprüche 1 bis 8,
- bei dem eine Brenner-Information über einen an die Vorrichtung (100, 300) zum Schweißen oder Löten angeschlossenen Brenner (210, 210', 210") automatisch ermittelt wird und
- bei dem die Absaugeinrichtung (116, 316) abhängig von der Brenner-Information gesteuert wird.

11. Verfahren nach Anspruch 10,
**dadurch gekennzeichnet, dass** die Absaugleistung der Absaugeinrichtung (116, 316) abhängig von der Brenner-Information gesteuert wird.

12. Verfahren nach Anspruch 10 oder 11,
**dadurch gekennzeichnet, dass** als Brenner-Information der Brennertyp des angeschlossenen Brenners (210, 210', 210") ermittelt wird und die Absaugeinrichtung (116, 316) abhängig von dem Brennertyp gesteuert wird.
